# EUROPÄISCHE PATENTANMELDUNG

(11) **EP 1 184 079 A2**
(43) Veröffentlichungstag der Anmeldung: **06.03.2002**
(21) Anmeldenummer: 01120127.4
(22) Anmeldetag: 22.08.2001
(51) Int. Cl.: B01J 37/34, B01J 23/42, B01J 23/46, C25D 3/50, C25D 3/56

(54) **Elekrochemisches Verfahren zur Herstellung eines Katalysators**

(30) Priorität: 04.09.2000 DE 10043865
(71) Anmelder: DaimlerChrysler AG, 70567 Stuttgart (DE)
(72) Erfinder: Dahlhoff, Ellen, 89134 Blaustein[ (DE); Eickelberg, Wilm, 58093 Hagen (DE); Funke, Anett, 89231 Neu-Ulm (DE)

(57) **Zusammenfassung**

Die Erfindung betrifft ein Verfahren zur Herstellung eines Katalysators, wobei ein katalytisch aktives Material elektrochemisch auf einem Substrat abgeschieden wird, indem das Substrat in einen Elektrolyten getaucht wird, welcher das katalytisch aktive Material enthält und eine elektrische Spannung zwischen dem Substrat und einer Gegenelektrode angelegt wird, daß aus einer platinhaltigen schwefelsauren Lösung Platin auf einem metallischen Substrat abgeschieden wird oder daß aus einer schwefelsauren Lösung mit Platin und Ruthenium als katalytisch aktivem Material mit einem Verhältnis von Pt:Ru von 1:10 bis 1:20 ein Pt/Ru-Gemisch auf einem metallischen Substrat abgeschieden wird.

## Beschreibung

Die Erfindung betrifft ein Verfahren zur Herstellung eines Katalysators nach dem Oberbegriff des Anspruchs 1.

Aus der Offenlegung JP-A-08 134 682 ist ein Elektroplatierverfahren zur Beschichtung eines metallischen Substrats mit einer glatten Edelmetallschicht beschrieben, bei dem ein eisenhaltiges Substrat mit einem Platinüberzug versehen wird. Aus der Patentschrift DE 197 32 170 C2 ist ein Verfahren bekannt, ein keramisches SiC-Substrat örtlich selektiv mit einem Platinüberzug zu überziehen, dessen Oberfläche sich der rauhen Keramikoberfläche anpaßt, indem eine Gleichspannung zwischen das Substrat und eine Gegenelektrode angelegt wird. Das beschichtete Substrat wird anschließend bei erhöhter Temperatur über 400°C behandelt.

Es ist die Aufgabe der Erfindung, ein Verfahren zur Beschichtung eines metallischen Substrates anzugeben, welches die Abscheidung eines katalytisch aktiven Materials mit großer Oberfläche und guter Haftfestigkeit auf einem Stahlsubstrat ermöglicht.

Diese Aufgabe wird durch die Merkmale des unabhängigen Anspruchs gelöst.

Erfindungsgemäß wird eine Schicht aus katalytisch aktivem metallischem Material mittels elektrochemischer Abscheidung auf einem Metallsubstrat abgeschieden, wobei das Substrat in einen Elektrolyten getaucht ist, welcher das katalytisch aktive metallische Material vorzugsweise in Form eines Precursors enthält und eine elektrische Spannung zwischen dem Substrat und einer Gegenelektrode angelegt wird, wobei zwischen Substrat und Gegenelektrode eine elektrische Spannung angelegt wird, und das katalytisch aktive Material als poröse oder unzusammenhängende Schicht auf dem Substrat abgeschieden wird.

Besonders vorteilhaft ist, das Substrat an seiner zu beschichtenden Oberfläche vor der Abscheidung mit einer vorgegebenen Oberflächenrauhigkeit zu versehen, wobei die Oberflächenrauhigkeit bevorzugt im Bereich von 0,3 µm bis 10 µm liegt. Ein weiterer bevorzugter Bereich der Oberflächenrauhigkeit liegt zwischen 0,3 µm und 3 µm. Günstigerweise wird die Oberflächenrauhigkeit durch thermische und/oder mechanische und/oder chemische Behandlung erzeugt.

Das katalytisch aktive Material ist bevorzugt aus Metallclustern mit einem Durchmesser zwischen 2 nm bis 1 µm, bevorzugt zwischen 2 nm bis 300 nm, gebildet.

Der besondere Vorteil des Verfahrens ist darin zu sehen, daß die Abscheidung von katalytisch aktiven Schichten mit sehr großer Oberfläche und relativ geringem Gehalt an katalytisch aktivem Material gelingt. Die Schichten weisen eine gute Haftfestigkeit auf dem Stahlsubstrat auf und sind auch im Dauereinsatz bei hohen Temperaturen stabil.

Bevorzugte katalytisch aktive Materialien weisen Edelmetalle auf. Ein günstiges katalytisch aktives Material ist Platin. Ein weiteres günstiges Material ist Platin/Ruthenium. Eine bevorzugte Gegenelektrode wird durch platiniertes Titanblech gebildet. Eine weitere bevorzugte Gegenelektrode besteht aus platiniertem Nickel.

Weitere Vorteile und Ausgestaltungen der Erfindung gehen aus den weiteren Ansprüchen und der Beschreibung hervor. Die Erfindung ist nachstehend anhand einer Zeichnung näher beschrieben, wobei
- Fig. 1: eine Prinzipdarstellung eines Aufbaus zur Durchführung des erfindungsgemäßen Verfahrens,
- Fig. 2: schematisch einen Schnitt durch eine beschichtete Oberfläche,
- Fig. 3: die Veränderung der elektrischen Leitfähigkeit einer RuCl₃-Lösung aufgrund des Alterungsverhaltens und
- Fig. 4: eine rasterelektronenmikroskopische Aufnahme einer Pt/Ru-Schicht zeigt.

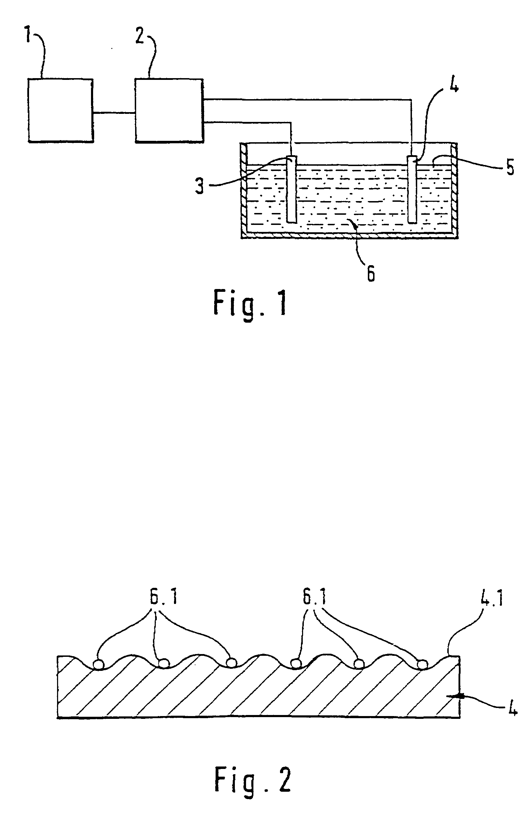

In der Fig. 1 ist eine Anordnung zur Durchführung des erfindungsgemäßen Verfahrens dargestellt. Ein Funktionsgenerator 1 erzeugt eine Spannung, welche ggfs. in einem Verstärker 2 verstärkt wird und zwischen eine Anode 3 und ein zu beschichtendes Substrat 4 in einem Abscheidebad 5 gelegt wird. Dabei kann vorzugsweise eine konstante Gleichspannung V_{dc} angelegt werden, es kann aber auch eine modulierte Gleichspannung Vₘ angelegt werden, bei der eine Gleichspannung V_{dc} mit einer Wechselspannung V_{ac} überlagert wird. Die Wechselspannung ist günstigerweise sinusförmig, kann aber auch andere Formen annehmen, etwa Sägezahn- oder Rechteckform. Die Wechselspannung V_{ac} weist vorzugsweise eine Amplitude auf, welche kleiner ist als die Gleichspannung V_{dc}.

Das katalytisch aktive Material 6 wird als Cluster auf dem Substrat 4 abgeschieden. Die Cluster können unterschiedliche Formen aufweisen, die vorteilhaft durch die Abscheideparameter vorgebbar sind. Das mit katalytisch aktivem Material 6 beschichtete Substrat 4 bildet dann den Katalysator.

Die Gleichspannung V_{dc} ist bevorzugt mindestens so groß wie das Abscheidepotential des katalytisch aktiven Materials 6 auf dem Substrat 4, besonders bevorzugt höchstens 50% größer. Bei einem Mischkatalysator, bei dem die einzelnen Komponenten unterschiedliche Abscheidepotentiale haben, bezieht sich dies vorzugsweise auf das Material mit dem höchsten Abscheidepotential der verwendeten Komponenten. Der genaue Wert der Gleichspannung V_{dc} ist abhängig von den verwendeten Konstituenten und Verfahrensbedingungen und kann z.B. für unterschiedlich vorbehandelte Substrate verschiedene Werte annehmen, die üblicherweise jedoch nicht stark voneinander abweichen. Bei der Abscheidung von Mischsystemen als katalytisch aktivem Material ist es möglich, daß die bevorzugte Gleichspannung V_{dc} auch unterhalb dieses Abscheidepotentials liegen kann. Ein günstiger Wert für ein gegebenes System kann auf an sich bekannte Weise mittels zyklischer Voltammetrie bestimmt werden.

Als ein besonders günstiges Substrat wird Edelstahl, besonders Cr-Ni-Stahl 1.4541 oder Cr-Ni-Stahl 1.4571 oder Cr-Al-Stahl 1.4767 verwendet. Für Pt/Ru-Mischkatalysatoren ist besonders aluminiumhaltiger Stahl günstig.

Es ist zweckmäßig, das Substrat vor der Beschichtung sandzustrahlen oder auf andere Art aufzurauhen, z.B. chemisch, und alkalisch zu entfetten. Dies verbessert die Haftung des katalytisch aktiven Materials 6 auf dem Substrat 4.

Der Strom zwischen Substrat 4, welches bei der Abscheidung als Kathode dient, und Anode 3 wird registriert und kann nach dem Faradayschen Gesetz als Maß zur Bestimmung der abgeschiedenen Menge des katalytisch aktiven Materials 6 dienen, welches im Abscheidebad enthalten ist, wobei zweckmäßigerweise Strombeiträge eliminiert werden, die aufgrund der Modulation zum Aufbau und Abbau der elektrolytischen Doppelschicht fließen, da diese nicht von der Reduktion oder Oxidation von Kationen bzw. Anionen herrühren.

Bevorzugt werden zur Herstellung des Katalysators ein Edelmetall wie Pt oder Mischungen von Edelmetallen mit weiteren katalytisch aktiven Materialien, bevorzugt Pt/Ru, abgeschieden. Eine günstige, preiswerte Anode ist platiniertes Titan statt einer üblichen Opferanode aus massivem Platin, welche besonders vorteilhaft eingesetzt werden kann, falls Platin als eine Komponente des katalytisch aktiven Materials abgeschieden werden soll. Es sind jedoch auch andere Edelmetalle und auch andere Metalle in dieser erfinderischen Weise abscheidbar. Bevorzugt werden Elemente der Nebengruppe VIIIB mit abgeschieden, besonders bevorzugt Ruthenium, Osmium, Iridium.

Die angelegt Spannung kann im Spannungs-Offsetwert V_{dc} eingestellt werden, um für das aktuelle System die Abscheideparameter zu optimieren. Bei Verwendung von modulierter Gleichspannung können die Abscheideparameter auch in der Frequenz und/oder in der Amplitude der Modulationsspannung entsprechend eingestellt werden.

Die Werte können sowohl die Größe der Cluster beeinflussen, welche auf der metallischen Kathode abgeschieden werden, als auch deren Morphologie. Für verschiedene Einsatzzwecke kann durch geeignete Wahl der Abscheideparameter und der Beschichtungsdauer jeweils die optimale Clustergröße eingestellt werden.

Die Cluster auf dem Substrat 4 stellen insgesamt eine große aktive Oberfläche für katalytische Reaktionen zur Verfügung. Es ist besonders vorteilhaft, die Oberfläche des zu beschichtenden Substrates 4 vor der Beschichtung aufzurauhen, etwa durch Beizen oder Sandstrahlen. Auch andere Methoden zur Erhöhung der Oberflächenrauhigkeit sind möglich. Dies ist in Fig. 2 anhand einer schematischen Seitenansicht einer beschichtete Oberfläche dargestellt. Ein Substrat 4 weist eine aufgerauhte Oberfläche 4.1 auf, auf der kugelförmige Metallcluster 6.1 in Vertiefungen angeordnet sind. Die Metallcluster 6.1 können auch an den Spitzen oder Flanken der Aufrauhungen abgelagert sein.

Die erhöhte Oberflächenrauhigkeit hat den Vorteil, daß abgeschiedene Cluster 6.1 besser an der Substratoberfläche haften und ein unerwünschtes Zusammenlaufen der Cluster 6.1 bei der Abscheidung oder auch bei höheren Temperaturen im Betrieb des Katalysators unterbunden wird. Es bildet sich eine katalytisch aktive Schicht aus einzelnen Clustern 6.1, wobei die Schicht vorzugsweise nicht geschlossen ist, sondern aus isolierten Clustern 6.1 gebildet ist.

Bevorzugt liegt die Oberflächenrauhigkeit zwischen 0,3 um und 10 µm, besonders bevorzugt zwischen 0,3 um und 3 um. Durch die feinverteilten Cluster 6.1 bildet sich eine große aktive Oberfläche. Ein weiterer Vorteil ist, daß die erhöhte Oberflächenrauhigkeit selbst noch zur Vergrößerung der Oberfläche des Substrats 4 und damit auch der chemisch aktiven Oberfläche beiträgt. Gleichzeitig können die Cluster 6.1 sehr klein sein, so daß insgesamt nur eine geringe Menge des teuren katalytisch aktiven Materials 6 abgeschieden werden muß, aber der Katalysator sich gleichzeitig durch eine hohe katalytische Aktivität auszeichnet.

Die Haftung der metallischen Cluster 6.1 auf der Substratoberfläche 4.1 ist sehr gut. Dadurch wird die Katalysatorschicht erosionsbeständiger, so daß auch bei häufigem Temperaturwechsel und starker Beanspruchung im Betrieb praktisch kein Materialverlust zu beobachten ist.

Günstig ist vor auch, daß wegen der guten Haftung keine zusätzliche Haftvermittlerschicht zwischen katalytisch aktiver Schicht und Substrat aufgebracht werden muß. Ein besonderer Vorteil gegenüber solchen üblichen Katalysatoren besteht darin, daß gemäß der Erfindung ein sehr guter Wärmeübergang von der Katalysatorschicht zum Substrat 4 möglich ist, da metallische Cluster 6.1 mit einem metallischen Substrat 4 verbunden sind. Eine Haftvermittlerschicht würde den Wärmeübergang deutlich verschlechtern.

Ein erfindungsgemäß beschichtetes Substrat 4 ist daher besonders für den Einsatz als Oxidationskatalysator zur Abgasbehandlung in Brennstoffzellensystemen geeignet. Ein weiterer günstiger Einsatz ist bei verschiedenen heterogen katalysierten Prozessen zu sehen. Besonders vorteilhaft ist der erfindungsgemäße Katalysator und das erfindungsgemäße Verfahren bei Abgaskatalysatoren für Fahrzeuge.

Ein besonders bevorzugter Katalysator wird durch Abscheidung von Ruthenium auf Edelstahl, bevorzugt aus aluminiumhaltigem Edelstahlblech 1.4767 hergestellt. Dieses Substrat hat den großen Vorteil, daß es beim Einsatz bei hohen Temperaturen passiviert und so gegen Korrosion geschützt ist.

Es können neben den bevorzugten Mischkatalysatoren von Platin/Ruthenium auf diese Weise auch Katalysatoren mit Mischungen von Edelmetallen mit katalytisch aktiven Materialien der Nebengruppe VIIIB, wie z.B. PtRh, PtPd, PtIr, PtOs abgeschieden werden.

Ein solcher Katalysator zeigt eine gute Aktivität für Methanol und Wasserstoff und zum einen eine hohe Toleranz für Kohlenmonoxid und vorzugsweise auch eine gute Umsetzung für Kohlenmonoxid. Ein solcher Katalysator ist daher besonders für den Einsatz in methanolbetriebenen Brennstoffzellenfahrzeugen geeignet, besonders bevorzugt in katalytischen Brennern.

Für die Codeposition von Platin und Ruthenium zeigt sich, daß Parameter wie Temperatur, Konzentration des Leitelektrolyten, Konzentration des Platins im Elektrolyten, das Abscheidesystem praktisch nicht beeinflussen.

Die Temperatur kann deshalb zweckmäßigerweise bei Raumtemperatur gehalten werden, während der Leitelektrolyt vorzugsweise schwefelsauer ist. Günstig ist eine Konzentration des Leitelektrolyten von vorzugsweise 0,1 molarer Schwefelsäure. Für die Abscheidung wird eine Methode bevorzugt, die ein Schichtwachstum nicht begünstigt. So begünstigt ein Pulsstromverfahren bei der Codeposition von Platin und Ruthenium ein Schichtwachstum und unterdrückt die Keimbildung, im Gegensatz zur Abscheidung von reinem Platin. Es wird daher bei der Codeposition vorzugsweise eine Offsetspannung angelegt, jedoch keine pulsierende Spannung überlagert.

Zur Herstellung der Mischkatalysatoren ist die Verwendung von H₂PtCl₆ und RuCl₃ als galvanische Salze vorteilhaft. Versuche mit anderen Salzen, z.B. RuNC, einem Rutheniumnitrooctachlorokomplex, führen zu weniger befriedigenden Ergebnissen.

Die Abscheidung der Mischkatalysatoren wird hauptsächlich von zwei Faktoren beeinflußt, der Offsetspannung und der Rutheniumkonzentration.

Günstig ist ein Spannungsintervall für die Offsetspannung zwischen 1000 mV und 1400 mV. Die untere Grenze ergibt sich aus Erfahrungswerten, die gezeigt haben, daß es nicht möglich ist, Katalysator effektiv unterhalb von 1000 mV abzuscheiden. Die obere Grenze ist aus sicherheitstechnischen Gründen gewählt, da sich bei höheren Spannungen ab ca. 1,45 V giftiges Ruthenium(VIII)-oxid RuO₄ entsteht.

Für die Rutheniumkonzentration wird ein Konzentrationsverhältnis bevorzugt, bei dem mehr Ruthenium als Platin in der Elektrolytlösung vorhanden ist. Bevorzugt ist ein Verhältnis im Bereich von Pt:Ru von 1:10 bis 1:20. Damit gelingt es, ein Platin/Rutheniumverhältnis von 1:1 in der abgeschiedenen Schicht zu erhalten, was eine optimal katalytische aktive Oberfläche des Katalysators ergibt.

Bei einem bevorzugten Platingehalt von 0,1 g/l wird daher der Rutheniumgehalt entsprechend zwischen 1 g/l bis 2 g/l eingestellt. Bei 0,2 g/l Platingehalt ergibt sich ein bevorzugter Rutheniumgehalt von 2 g/l bis 4 g/l. Bei 0,05 g/l Platin ergibt sich entsprechend ein günstiger Rutheniumgehalt zwischen 0,5 g/l und 1 g/l.

Zu Beginn der Abscheidung wird das Elektrodensystem und die Elektrolytlösung vorbereitet, wobei als Leitelektrolyt vorzugsweise 0,1 molare Schwefelsäure verwendet und die Leitsalze auf der Basis dieser Lösung hergestellt werden.

Es zeigt sich, daß die Pt- und die Ru-Lösungen Alterungseffekten unterliegen und daher vorteilhafterweise mindestens 20 Stunden, bevorzugt drei Tage (72 Stunden) vor der Abscheidung angesetzt werden sollen. So dissoziiert z.B. eine frisch bereitete wäßrige Lösung von [RuCl₃(H₂O)₃] zuerst nicht in ionische Anteile; erst mit der Zeit, insbesondere in verdünnter saurer Lösung, erfolgt eine Hydrolyse unter Bildung von Chlorid. Es ist günstig, den platin- und rutheniumhaltigen Elektrolyten 5 unter Einwirkung von elektromagnetischer Strahlung und/oder Luft- und/oder Sauerstoffeinwirkung zu altern. Dies ist für die Abscheidung von Pt als auch für die Codeposition von Pt/Ru und anderen Mischungen von katalytisch aktivem Material günstig.

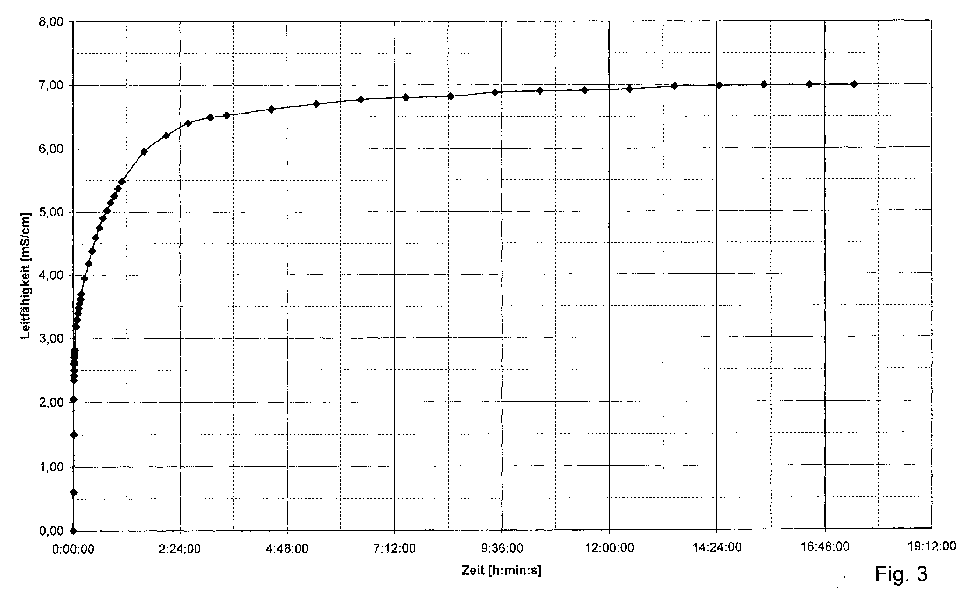

Fig. 3 zeigt ein solches Alterungsverhalten einer Elektrolytlösung von RuCl₃. Dazu wurden 2 g RuCl₃·H₂O in einem Liter Wasser gelöst und die elektrische Leitfähigkeit über 18 Stunden gemessen. Die elektrische Leitfähigkeit ist zu Beginn niedrig. Sie steigt dann steil an und nähert sich einem Grenzwert von ca. 7 mS/cm. Dies stimmt mit der Beobachtung überein, daß mit einem frisch angesetzten Elektrolyten keine Rutheniumabscheidung möglich ist. RuCl₃ geht in diesem Fall zwar in Lösung, es bildet sich jedoch ein elektroneutraler Komplex, der nicht auf das Anlegen einer äußeren Spannung reagiert und so eine Abscheidung von Ruthenium blockiert.

Nachdem die Gegenelektrode und das zu beschichtende Substrat in den Elektrolyten eingesetzt wurden, ist es günstig, die Elektrolytlösung mit einem Inertgas, vorzugsweise Argon, zu spülen, um gelöste Fremdgase auszutreiben. Um ,bei der Codeposition von Pt/Ru eine erhöhte Anzahl an Rutheniumionen zu erhalten, muß im Vergleich zu einer (PtCl₆)⁻²-Lösung eine viel höhere Rutheniumkonzentration als die Platinkonzentration, vorzugsweise mindestens 1 g Ru/l, gewählt werden, damit Ruthenium abgeschieden wird.

Es zeigt sich, daß die Abscheidung von Ruthenium bei der Codeposition von Pt/Ru stark durchtritts- und diffusionsgehemmt ist. Bei Abscheidungen sollte daher die Elektrolytlösung möglichst nicht bewegt bzw. gerührt werden. Bei anliegender Spannung wird zuerst Ru(III) zu Ru(II) reduziert. Der letzte Schritt der Abscheidung, nämlich die Reduktion von Ru(II) zu metallischem Ruthenium, ist ein Prozeß, der nur unter Bedingungen stattfindet, die eine ausgedehnte, ruhende Diffusionsschicht voraussetzen. Sonst würde sich nur ein zyklisches Reduzieren von Ru(III) und Oxidieren von Ru(II) einstellen.

Bei der Codeposition von Pt und Ru aus einem Mischelektrolyten liegt das Abscheidepotential von Pt bei etwa 1,3 V, das Abscheidepotential von Ru bei ca. 0,7 V.

Es zeigt sich auch, daß Katalysatoren mit scheibenförmigen Substraten einen geringeren Umsatz aufweisen als etwa kugel- oder zylinderförmige Substrate. Katalysatoren mit zylinderförmigen Cr-Al-Substraten (1.4767) weisen einen um 50% höheren Umsatz auf als mit scheibenförmigen Substraten.

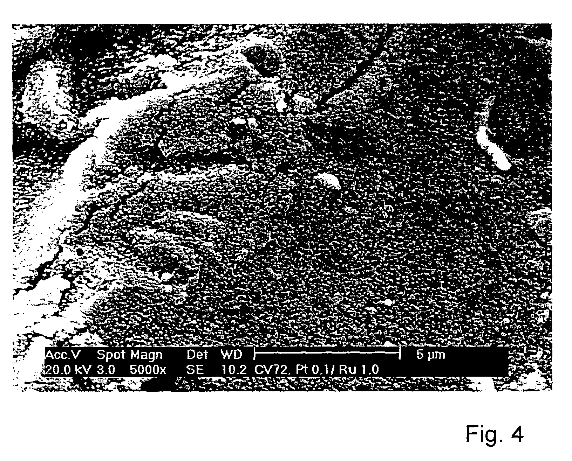

In Fig. 4 ist eine rasterelektronenmikroskopische Aufnahme einer Katalysatorschicht mit kleinen Clustern dargestellt, die aus Platin und Ruthenium bestehen.

Eine besonders günstige Belegung des Substrats ergibt sich bei einem Pt:Ru-Verhältnis im Elektrolyten von etwa 1:10 und einer Offsetspannung von 1,2 V, eine weitere besonders günstige Belegung ergibt sich bei einem Pt:Ru-Verhältnis von etwa 1:20 mit einer Offsetspannung von 1,4 V. Bei diesem Wert ergibt sich gleichzeitig eine maximale Belegung des Substrats.

Die aktive Oberfläche des Katalysators zeigt ein sehr ähnliches Verhalten wie die Belegung. Die maximale aktive Oberfläche ergibt sich bei einem Pt:Ru-Verhältnis von 1:20 und einem Offsetwert von 1,4 V. Es wird ein lokales Maximum bei 1,2 V und einem Pt:Ru-Verhältnis von 1:10 beobachtet. Ein Sattelpunkt wird bei 1,3 V und einem Verhältnis von Pt:Ru=1:13 beobachtet.

Ein erfindungsgemäß hergestellter Katalysator ist besonders erosionsbeständig, und die Herstellung ist gut reproduzierbar. Die Prozeßkontrolle ist einfach, und die Katalysatoreigenschaften lassen sich durch einfache Modifikationen des Abscheideprozesses reproduzierbar einstellen. Die Materialausbeute ist gut, so daß z.B. für hochaktive Katalysatoren vergleichsweise geringe Mengen des katalytisch aktiven Materials eingesetzt werden müssen.

Der besondere Vorteil bei der Verwendung eines Pt/Ru-Mischkatalysators besteht darin, daß der Kohlenmonoxid-Umsatz verbessert wird und gleichzeitig eine Platinvergiftung durch das Kohlenmonoxid (CO) vermindert wird.

Da die Chemisorption von CO an einer Platinoberfläche sehr hoch ist, neigt ein reiner Pt-Katalysator dazu, unter CO-Einfluß zu vergiften, d.h. alle aktiven Zentren auf der Oberfläche sind blockiert, und CO kann nur noch schlecht umgesetzt werden. Dagegen aktiviert Ruthenium Sauerstoff sehr stark und stellt diesen an der Grenzschicht eines Pt/Ru-Mischkatalysators dem aktivierten CO auf der Platinoberfläche bereit. Ruthenium wirkt ebenso aktivierend auf Wasser. Ein Wassermolekül wird an einer Rutheniumoberfläche in eine adsorbierte OH-Gruppe und adsorbiertes H gespalten. Die aktivierte OH-Gruppe reagiert mit einem aktivierten CO-Molekül auf der Platinoberfläche zu CO₂. Auf der Platinoberfläche verbleibt lediglich ein adsorbiertes H, das sofort mit Sauerstoff zu Wasser umgesetzt wird.

Es zeigt sich, daß ein Pt/Ru-Mischkatalysator nicht nur Sauerstoff, sondern auch Wasserstoff aktiviert. Der Wasserstoffbedeckungsgrad eines Pt/Ru-Katalysators ist generell höher als bei einem reinen Pt-Katalysator. So zeigt ein solcher Pt/Ru-Katalysator sehr gute Kaltstarteigenschaften bei einem Wasserstoff/Luftgemisch. Bei einer Gaszusammensetzung mit 3 nl/min H₂ und 27 nl/min Luft zündet das Gas an der Katalysatoroberfläche bei ca. 50°C mit einem vollständigen Wasserstoffumsatz.

Auch bei einem Einsatz als Katalysator in einem katalytischen Brenner in einem Gasreinigungssystem eines Brennstoffzellensystems, welches mit einem wasserstoffreichen Reformat betrieben wird, wobei das Reformerabgas in dem katalytischen Brenner gereinigt werden soll, zeigt gute Resultate. Der CO-Umsatz ist hoch und um so besser, je höher die Temperatur des katalytischen Brenners ist. Da bei höherem CO-Gehalt wegen der hohen Verbrennungsenthalpie von CO mehr thermische Energie bei der CO-Verbrennung erzeugt wird, wird der Umsatz von CO schon um 1-2 Prozentpunkte verbessert, wenn die Eintrittsmenge des Kohlenmonoxids geringfügig, z.B. um 0,05 nl/min, erhöht wird. Ebenso wirkt ein relativ hoher Wasseranteil im Gasgemischstrom günstig.

Eine bevorzugte Verwendung eines erfindungsgemäß hergestellten Katalysators betrifft die Verwendung in CO-reicher Umgebung, insbesondere in einer Abgasreinigungsanlage in einem Kraftfahrzeug. Eine weitere bevorzugte Verwendung eines erfindungsgemäßen Katalysators betrifft dessen Verwendung in einem Brennstoffzellensystem.

## Patentansprüche

1. Verfahren zur Herstellung eines Katalysators, wobei katalytisch aktives Material (6, 6.1) elektrochemisch auf einem Substrat (4) abgeschieden wird, indem das Substrat (4) in einen Elektrolyten (5) getaucht wird, welcher das katalytisch aktive Material (6) enthält und eine elektrische Spannung zwischen dem Substrat (4) und einer Gegenelektrode (3) angelegt wird,
**dadurch gekennzeichnet,**
**daß** aus einer platinhaltigen schwefelsauren Lösung (5) Platin auf einem metallischen Substrat (4) abgeschieden wird oder daß aus einer schwefelsauren Lösung (5) mit Platin und Ruthenium als katalytisch aktivem Material (6, 6.1) mit einem Verhältnis von Pt:Ru von 1:10 bis 1:20 ein Pt/Ru-Gemisch auf einem metallischen Substrat (4) abgeschieden wird.

2. Verfahren nach Anspruch 1,
**dadurch gekennzeichnet,**
**daß** der Elektrolyt (5) vor der Abscheidung des katalytisch aktiven Materials (6, 6.1) einem Alterungsverfahren unterzogen wird.

3. Verfahren nach Anspruch 2,
**dadurch gekennzeichnet,**
**daß** der Elektrolyt (5) durch Einwirkung von elektromagnetischer Strahlung und/oder Luft- und/oder Sauerstoffeinwirkung gealtert wird.

4. Verfahren nach Anspruch 3,
**dadurch gekennzeichnet,**
**daß** der Elektrolyt (5) nach zumindest 20 Stunden Alterung verwendet wird.

5. Verfahren nach Anspruch 1,
**dadurch gekennzeichnet,**
**daß** der Elektrolyt (5) während der Abscheidung im wesentlich unbewegt bleibt.

6. Verfahren nach Anspruch 1,
**dadurch gekennzeichnet,**
**daß** vor der Abscheidung im Elektrolyten gelöste Gase durch Inertgas ausgespült wird.

7. Verfahren nach Anspruch 1,
**dadurch gekennzeichnet,**
**daß** als Substrat (4) ein Stahl aus einer Gruppe von Chrom-Stählen 1.4541 und/oder 1.4571 und/oder 1.4767, ausgewählt wird.

8. Verfahren nach Anspruch 1,
**dadurch gekennzeichnet,**
**daß** zwischen Substrat (4) und Gegenelektrode (3) eine elektrische Gleichspannung (V_{dc}) zwischen 1 und 1,4 Volt angelegt wird.

9. Verfahren nach Anspruch 1,
**dadurch gekennzeichnet,**
**daß** zwischen Substrat (4) und Gegenelektrode (3) eine modulierte elektrische Spannung angelegt wird, wobei einer Gleichspannung (V_{dc}) eine Wechselspannung (V_{ac}) überlagert ist.

10. Verfahren nach Anspruch 1,
**dadurch gekennzeichnet,**
**daß** die Wechselspannung (V_{ac}) eine Amplitude aufweist, welche kleiner ist als die Gleichspannung (V_{dc}).

11. Verfahren nach Anspruch 1,
**dadurch gekennzeichnet,**
**daß** bei einer Codeposition die Gleichspannung (V_{dc}) mindestens dem Abscheidepotential des katalytisch aktiven Materials (6, 6.1) mit dem höheren Abscheidepotential entspricht.

12. Verfahren nach Anspruch 1,
**dadurch gekennzeichnet,**
**daß** das Substrat (4) an seiner zu beschichtenden Oberfläche (4.1) vor der Abscheidung aufgerauht wird.

13. Verfahren nach Anspruch 1,
**dadurch gekennzeichnet,**
**daß** die Gegenelektrode (3) durch platiniertes Titan gebildet wird.

14. Katalysator in einem Brennstoffzellensystem, der nach einem der Ansprüche 1 bis 12 hergestellt ist.

15. Katalysator in einem Abgasreingungssystem in einem Kraftfahrzeug, der nach einem der Ansprüche 1 bis 12 hergestellt ist.
